Europäisches Patentamt

European Patent Office

Office européen des brevets

(19)

(11) Publication number: **0 461 611 A2**

# EUROPEAN PATENT APPLICATION

(12)

(21) Application number: **91109560.2**

(22) Date of filing: **11.06.91**

(51) Int. Cl.⁵: **G06K 15/12**

(30) Priority: **13.06.90 JP 152672/90**

(43) Date of publication of application:
**18.12.91 Bulletin 91/51**

(84) Designated Contracting States:
**DE FR GB IT NL SE**

(71) Applicant: **TOKYO ELECTRIC CO., LTD.**
**6-13, 2-chome, Nakameguro**
**Meguro-ku Tokyo(JP)**

(72) Inventor: **Saito, Akihiro**
**3222-3, Oooka**
**Numazu-shi, Shizuoka-ken(JP)**

(74) Representative: **Weber, Joachim, Dr. et al**
**Hoefer, Schmitz, Weber, Patentanwälte**
**Ludwig-Ganghofer-Strasse 20**
**W-8022 Grünwald/München(DE)**

(54) Electronic photographing apparatus.

(57) In an electronic photographing apparatus having a microprocessor, an operation unit (41) and a mechanism controller (42) which is operated upon operation of the operation unit are electrically connected to each other via a serial communication bus (43). The operation unit (41) includes an operation panel (29) provided with various operation switches and a display device (36), a first serial/parallel I/O converter (44) for performing a serial communication with the mechanism controller (42) via the serial communication bus (43), and a microprocessor (45) for controlling the first serial/ parallel I/O converter (44) to perform input/output processing of control data and controlling the operation panel (29) via an I/O port (48). The the mechanism controller (42) includes a second serial/parallel I/O converter (50) for performing a serial communication with the operation unit (41) via the serial communication bus (43), and a mechanism control I/O port (52), connected to various loads (53-58), for performing input/output control of control data with the second serial/parallel I/O converter (50) and the various loads (53-58).

F I G. 3

The present invention relates to improvement in a microcomputer-implemented mechanism control apparatus suitable for an electronic photographing apparatus such as a laser printer.

In a laser printer, for example, a photosensitive body such as a photosensitive drum is charged by a charging unit, information is recorded with a laser beam on the charged photosensitive body as an electrostatic latent image, and a toner is applied to the electrostatic latent image by a developing unit. Meanwhile, a paper sheet is fed from a paper feed unit provided with a paper feed cassette, and is conveyed, via a convey path, to a transfer unit for transferring a toner image from the photosensitive drum. The toner image is transferred from the photosensitive drum onto the paper sheet at a timing at which the paper sheet reaches the transfer unit. The image on the paper sheet after the transfer operation is fixed by a fixing device, and the paper sheet is then exhausted.

The laser printer described above is often provided with a microprocessor. The microprocessor controls rotation of the photosensitive drum via an I/O port, and also controls mechanism units such as a feed motor for performing convey control of a paper sheet, the charging unit, the transfer unit, the fixing device, and the like. In addition, the microprocessor controls an operation unit comprising various operation switches, and display means such as lamps, a display, and the like.

Since the mechanism units such as the feed motor, the charging unit, the transfer unit, the fixing device, and the like are arranged in a housing, and the operation unit is arranged on the surface of the housing, their arranging positions are separated. For this reason, the microprocessor and the I/O port are normally arranged in the mechanism units, and the operation unit at the separate position is connected to the I/O port via a large number of signal lines.

However, when the operation unit is connected to the I/O port via the large number of signal lines, the large number of relatively long signal lines are arranged inside the housing, resulting in complicated wiring.

It is accordingly an object of the present invention to provide an electronic photographing apparatus in which the microprocessor is arranged on the operation unit side, so that the length of signal lines for connecting the microprocessor and the operation unit via an I/O port can be shortened, the number of relatively long signal lines for connecting the microprocessor and a mechanism controller via the I/O port can be decreased, a wiring arrangement can be prevented from being complicated, and various operation units including, e.g., microprocessors having different numbers of bits can be easily used as the operation unit.

According to the present invention, an operation unit and a mechanism controller operated upon operation of the operation unit are electrically connected to each other via a serial communication bus. The operation unit comprises an operation panel provided with various operation switches and a display, a first serial/ parallel I/O converter for performing a serial communication with the mechanism controller via the serial communication bus, and a microprocessor for controlling the serial/parallel I/O converter to execute input/output (I/O) processing of, e.g., control data, and controlling the operation panel via an I/O port. The mechanism controller comprises a second serial/parallel I/O converter for performing a serial communication with the operation unit via the serial communication bus, and a mechanism control I/O port, connected to various loads, for performing I/O control of, e.g., control data with the second serial/parallel I/O converter and the various loads.

According to the present invention, in the operation unit, the microprocessor controls the operation panel via the I/O port. Even if the number of wiring lines for connecting the I/O port and the operation panel is large, since a distance between the I/O port and the operation panel is relatively small, wiring lines can be prevented from being complicated. Since communication control between the operation unit and the mechanism controller is performed via the serial communication bus connected between the first and second serial/parallel I/O converters, the number of wiring lines can be made small although a distance between the two units is relatively long, resulting in simple wiring.

This invention can be more fully understood from the following detailed description when taken in conjunction with the accompanying drawings, in which:

Figs. 1 to 5 show embodiments of the present invention, in which:

Fig. 1 is a schematic side view of the internal configuration of an electronic photographing apparatus according to an embodiment of the invention;

Fig. 2 is a top view at an operation panel side of the apparatus shown in Fig. 1;

Fig. 3 is a circuit block diagram of the apparatus shown in Fig. 1;

Fig. 4 is a block diagram illustrating the data flow in the configuration of Fig. 3; and

Fig. 5 is another circuit diagram applicable to the apparatus of Fig. 1.

An embodiment of the present invention will be described below with reference to the accompanying drawings. In this embodiment, the present invention is applied to a laser printer.

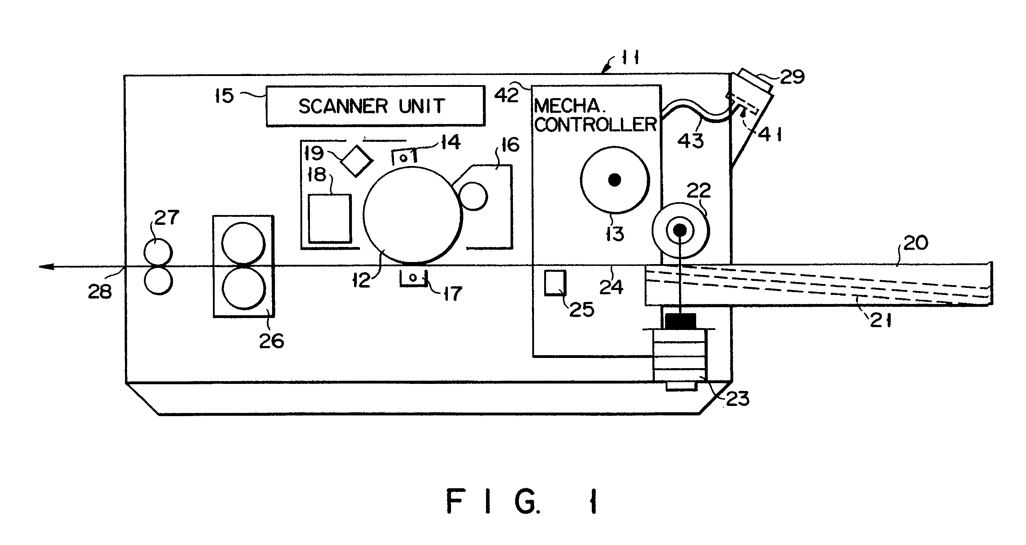

As shown in Fig. 1, photosensitive drum 12 whose surface is formed of a photoconductive material is arranged in a substantially central portion in housing 11. Photosensitive drum 12 is rotated in one direction, i.e., the clockwise direction in Fig. 1 by feed motor 13 comprising a stepping motor. Charging unit 14 for charging a photosensitive body of photosensitive drum 12, laser scanner unit 15 for radiating a laser beam onto the photosensitive body charged by charging unit 14, and exposing and recording information to form an electrostatic latent image, developing unit 16 for applying a toner as a developing agent onto the electrostatic latent image formed on the photosensitive body, transfer unit 17 for transferring a toner image from photosensitive drum 12 onto a fed paper sheet, cleaning device 18 for removing the residual toner from photosensitive drum 12 after the transfer operation, and discharging unit 19 for discharging photosensitive drum 12 after the transfer operation are arranged in turn around photosensitive drum 12 in accordance with an electrophotography process.

Paper feed unit 20 is arranged on one side of housing 11. Paper feed unit 20 comprises paper feed roller 22 which can be in contact with the upper surface of paper sheet 21 stored in unit 20, and paper feed solenoid 23 for performing a contact operation of paper feed roller 22.

When rotating paper feed roller 22 is in contact with paper sheet 21 by paper feed solenoid 23 for a predetermined period of time, paper sheet 21 is fed from paper feed unit 20 one by one at a predetermined timing. Fed paper sheet 21 is conveyed to the position of transfer unit 17 via convey path 24 provided with a convey roller (not shown). Feed sensor 25 is arranged midway along convey path 24.

Paper sheet 21 on which the toner image is transferred from photosensitive drum 12 by transfer unit 17 is fed to thermal fixing unit 26, and the toner image is thermally fixed by thermal fixing unit 26. Thereafter, paper sheet 21 is exhausted outside the housing from paper sheet exhaust port 28 arranged on the other side of housing 11 by exhaust rollers 27.

Operation panel 29 is arranged on the upper end portion on one side of housing 11.

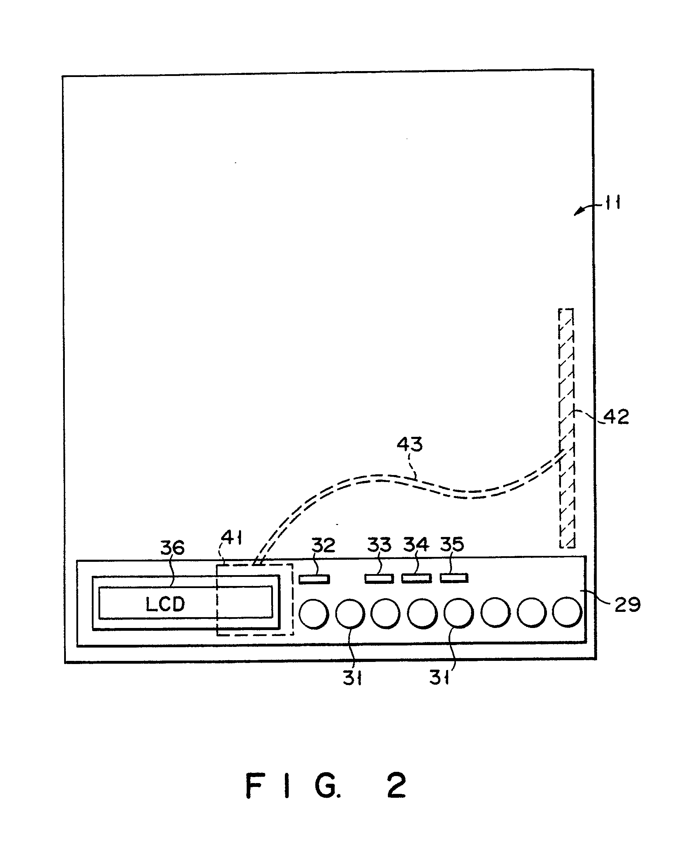

Operation panel 29 includes various operation switches 31 such as a start key, a print count setting key, and the like, power lamp 32, print enable indication lamp 33, data reception lamp 34, error lamp 35, and liquid crystal display (LCD) 36 for displaying, e.g., a message, as shown in Fig. 2.

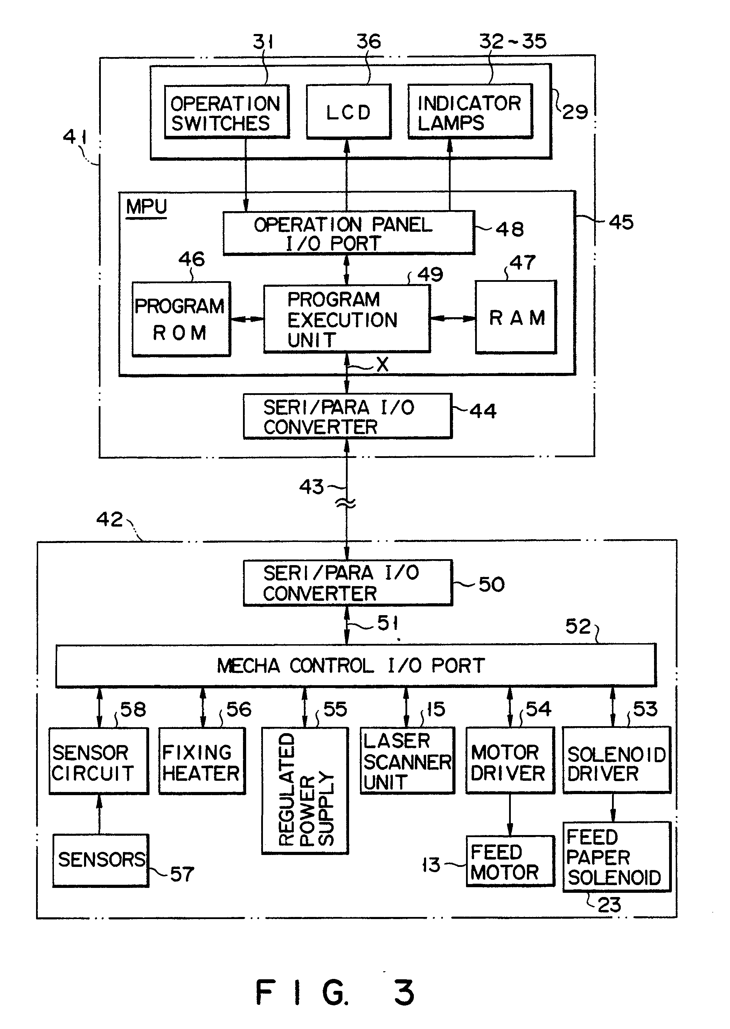

Fig. 3 is a block diagram showing a circuit arrangement. In Fig. 3, reference numeral 41 denotes an operation unit; 42, a mechanism controller; and 43, a serial communication bus for electrically connecting operation unit 41 and mechanism controller 42. As shown by the broken line in Fig. 2, controller 42 is connected to unit 41 via bus 43. Serial communication bus 43 is formed of four lines, i.e., two power supply lines, a serial clock line, and a data line for control commands.

Operation unit 41 includes the above-mentioned operation panel 29, first serial/parallel I/O converter 44 for performing a serial communication with mechanism controller 42 via serial communication bus 43, and microprocessor (MPU) 45 for controlling first serial/parallel I/O converter 44 to perform I/O processing of, e.g., control data, and controlling operation panel 29.

Microprocessor 45 comprises program ROM (read-only memory) 46, RAM (random-access memory) 47, operation panel I/O port 48 connected to various operation switches 31, indicator lamps 32 to 35, and LCD 36 of operation panel 29, and program execution unit 49 for controlling first serial/parallel I/O converter 44, RAM 47, and operation panel I/O port 48 on the basis of program data in program ROM 46. Unit 49 is coupled to converter 44 via internal bus X.

Mechanism controller 42 comprises second serial/parallel I/O converter 50 for performing a serial communication with operation unit 41 via serial communication bus 43, and mechanism control I/O port 52 connected to second serial/parallel I/O converter 50 via internal bus 51.

Mechanism control I/O port 52 is connected to paper feed solenoid driver 53 for driving paper feed solenoid 23, motor driver 54 for driving feed motor 13, laser scanner unit 15, regulated power supply 55 for supplying a high voltage to charging unit 14 and transfer unit 17, fixing heater 56 in thermal fixing unit 26, and sensor circuit 58 for controlling various sensors 57 including feed sensor 25 as various loads.

In this embodiment with the above arrangement, when the start key on operation panel 29 is operated, program execution unit 49 of microprocessor 45 controls first serial/parallel I/O converter 44 to transmit control data (command) to mechanism controller 42 via serial communication bus 43. In mechanism controller 42, when the control data from operation unit 41 is received by second serial/parallel I/O converter 50, various signals are output from serial/parallel I/O converter 50 to mechanism control I/O port 52 via internal bus 51.

Thus, feed motor 13 is driven by motor driver 54. In this manner, photosensitive drum 12, the convey roller, paper feed roller 22, and the like are rotated. In addition, a polygon motor of laser scanner unit 15 is also started.

Subsequently, paper feed solenoid 23 is driven by paper feed solenoid driver 53 for a predetermined period of time. Thus, paper feed roller 22 is drawn by suction for the predetermined period of time, and is brought into contact with the upper surface of paper sheet 21. Paper sheet 21 is fed from paper feed unit 20 onto convey path 24.

On the other hand, after the photosensitive body is charged by charging unit 14 upon rotation of photosensitive drum 12, image information is electrostatically recorded on the photosensitive body with a laser beam from laser scanner unit 15. A toner is applied to the electrostatic latent image by developing unit 16.

Passage of paper sheet 21 fed from paper feed unit 20 onto convey path 24 is detected by feed sensor 25, and paper sheet 21 is then conveyed to transfer unit 17. The toner image on photosensitive drum 12 reaches transfer unit 17 at a timing at which paper sheet 21 reaches transfer unit 17.

In this manner, the toner image on photosensitive drum 12 is transferred onto paper sheet 21. Paper sheet 21 on which the toner image is transferred is conveyed to thermal fixing unit 26, and the toner image is thermally fixed. Thereafter, paper sheet 21 is exhausted outside the housing from paper sheet exhaust port 28 by exhaust rollers 27.

In the series of operations, if a message display command is to be performed, program execution unit 49 drives LCD 36, via operation panel I/O port 48, to display a message. If a lamp indication command is to be performed, unit 49 controls to turn on indicator lamps 32 to 35 via operation panel I/O port 48.

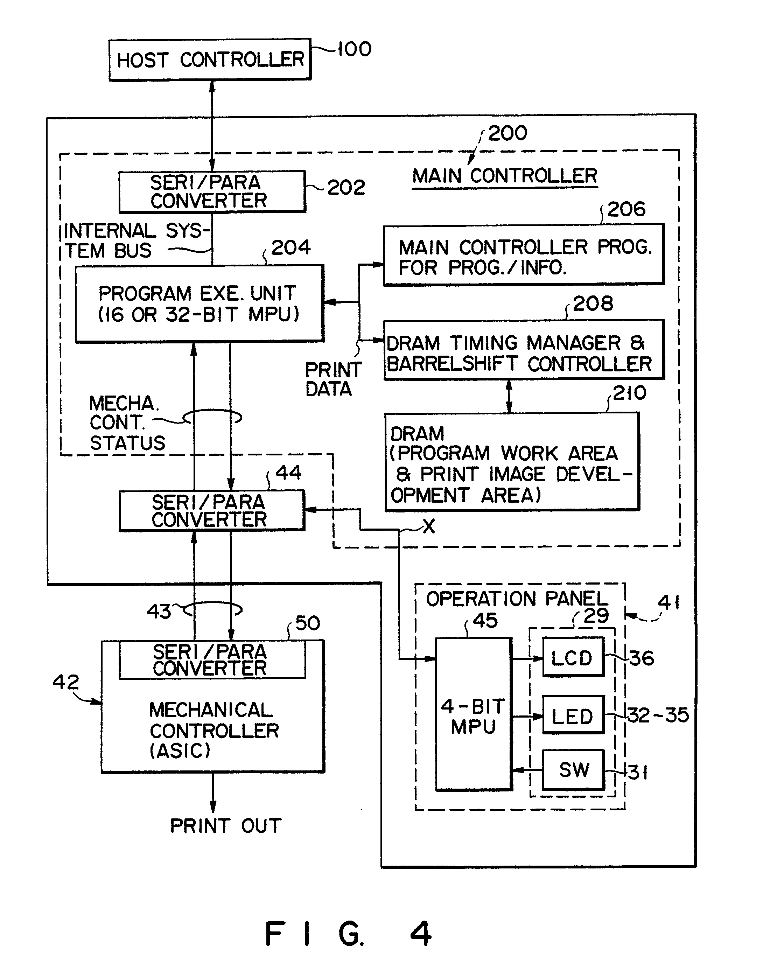

Fig. 4 is a block diagram explaining the data flow in the configuration of Fig. 3. In Fig. 4, program execution unit 204 in main controller 200 is coupled to host controller 100 for the apparatus of Fig. 1, via serial/parallel converter 202. According to instructions from host controller 100, a microcomputer (MPU) in unit 204 executes a program in ROM 206.

Print data obtained by the execution of the program is developed in DRAM 210. During the development, barrelshifting of the print data and operation timing of the DRAM are controlled by DRAM controller 208.

The print data (bitmap data) developed in DRAM 210 is sent to laser scanner unit 15 in mechanism controller 42 through a data line (not shown). The control status of the MPU in unit 204 is sent, in the form of a command, to controller 42 via serial communication bus 43. Meanwhile, the status of operation panel 29 is sent from microcomputer (4-bit MPU) 45 to controller 42.

In mechanism controller 42, a print output is generated in accordance with the print data, control status data (commands), and the like sent from operation unit 41.

The main portion (e.g., I/O port 52 and its peripheral circuits) of an electronic part of mechanism controller 42 can be constituted by an application specific integrated circuit (ASIC) which is designed according to the specification of the electronic photographing apparatus of Fig. 1.

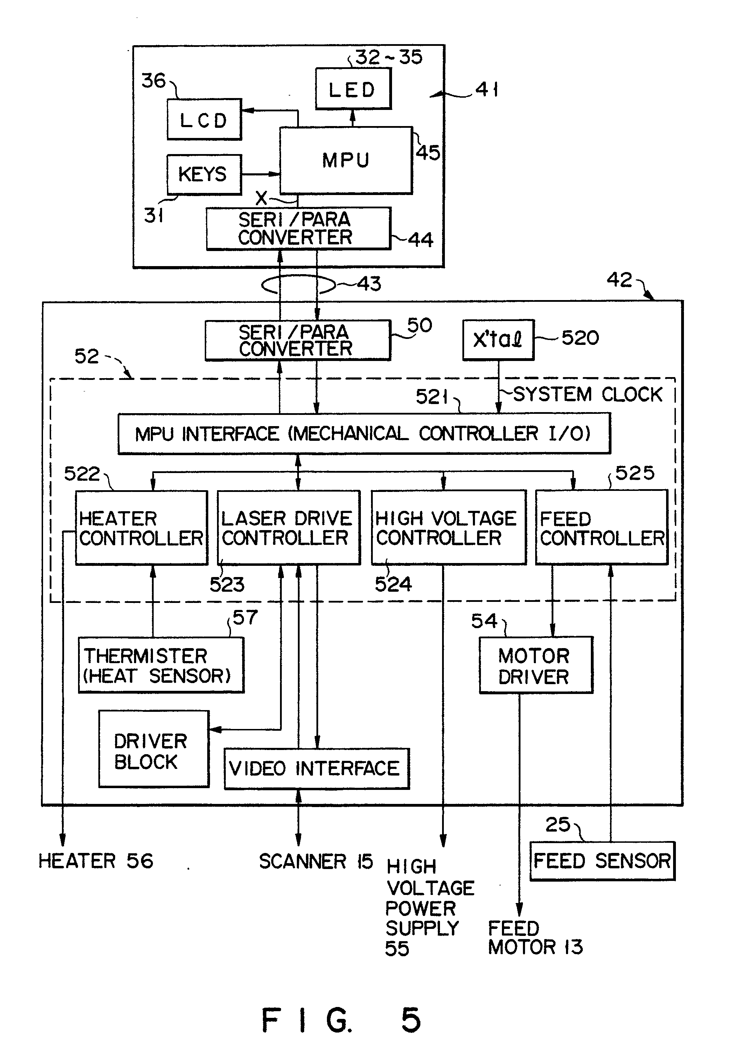

An example configuration of an electronic photographing apparatus using such an ASIC (one LSI chip) is shown in Fig. 5. In the example of Fig. 5, MPU interface 521 clocked by crystal 520, heater controller 522, laser drive controller 523, high voltage controller 524, feed controller 525, etc. are integrated in ASIC chip 52.

According to the configuration of Fig. 5, when several sets of the ASIC chips each of which is programmed according to its use or specification (such as print resolution) are prepared, then the concept of the present invention can be applied to various photographing apparatus by simply exchanging only one part (ASIC chip 52) of controller 42.

According to the embodiment of the invention, microprocessor 45 is arranged in operation unit 41, so that a distance between operation panel I/O port 48 of microprocessor 45 and operation panel 29 can be made small and signal lines therebetween can be integrally assembled. Then, complicated wiring for the signal lines can be avoided, although a large number of signal lines are used.

Although a distance between operation unit 41 and mechanism controller 42 separated therefrom is relatively large, since these units are connected via serial communication bus 43, the number of lines can be small (in the embodiment, it is four), and wiring lines thereof will not be complicated.

Since microprocessor 45 arranged in operation unit 41 communicates with mechanism controller 42 via serial communication bus 43, even if an 8-bit microprocessor used for microprocessor 45 is replaced with a 4-bit one or with a 16-bit one, operation unit 41 need only be replaced, and no change is required in mechanism controller 42. Therefore, an 8-bit microprocessor may be replaced with a 4-bit microprocessor to decrease cost and/or to omit unnecessary functions. Contrary to this, an 8-bit microprocessor may be replaced with a 16-bit microprocessor to improve or expand its functions.

In the above embodiment, the present invention is applied to the laser printer. However, the present invention is not limited to this.

As described above, according to the present invention, there can be provided a mechanism control apparatus comprising a microprocessor, in which the microprocessor is arranged on the operation unit side, so that the length of signal lines for connecting the microprocessor and the operation unit via an I/O port can be shortened, and the number of relatively long signal lines for connecting the microprocessor and a mechanism controller via the I/O port can be decreased. Therefore, a wiring arrangement can be prevented from being complicated, and various operation units including, e.g., microprocessors having different numbers of bits, different kinds, or different specifications, can be easily used.

## Claims

1. An electronic photographing apparatus having a prescribed specification, comprising:
   a) an operation unit (41) including:
   means (31) for supplying operation instructions to manipulate the electronic photographing apparatus, and
   first control means (45), responsive to said operation instructions, for providing a command for controlling the electronic photographing apparatus in accordance with a predetermined program;
   b) a controller unit (42) being physically separated from said operation unit (41) and including: second control means (52-58) for controlling an action of the electronic photographing apparatus in accordance with the command from said first control means (45); and
   characterized by further comprising
   c) means (43, 44, 50), electrically coupled to said operation unit (41) and said controller unit (42), for serially transmitting contents of said command from said first control means (45) to said second control means (52-58).

2. An apparatus according to claim 1, characterized in that said serially transmitting means (43, 44, 50) includes:
   first conversion means (44) for converting the command from said first control means (45) into one or more serial data;
   second conversion means (50) for converting the serial data from said first conversion means (44) into parallel data; and
   signal transmission lines (43), having a number corresponding to the number of the serial data from said first control means (45), for coupling said first conversion means (44) with said second conversion means (50).

3. An apparatus according to claim 1, characterized in that said first control means (45) includes:
   means (46) for storing said predetermined program;
   means (49) for executing commands of the program from said storing means (46); and
   means (47) for holding a result of execution by said executing means (49).

4. An apparatus according to claim 3, characterized in that said serially transmitting means (43, 44, 50) includes:
   first conversion means (44) for converting a control status corresponding to the command executed by said executing means (49) into serial data;
   second conversion means (50) for converting the serial data from said first conversion means (44) into parallel data; and
   a signal transmission line (43) for coupling said first conversion means (44) with said second conversion means (50).

5. An apparatus according to claim 4, characterized in that second control means (52-58) includes means (52) for controlling the action of the electronic photographing apparatus in accordance with the parallel data representing said control status sent through said signal transmission line (43).

6. An apparatus according to claim 1, characterized in that said second control means (52-58) includes means for integrating functions of said second control means (52-58) into an application specific integration circuit in accordance with a specification of the electronic photographing apparatus.

7. An apparatus according to claim 6, characterized in that said electronic photographing apparatus includes a laser printer, and said application specific integration circuit includes:
   means (522) for controlling a fixing heater operation of the laser printer;
   means (523) for controlling a laser scanner operation of the laser printer;
   means (524) for controlling a power supply of the laser printer;
   means (525) for controlling a copy paper feeding motor operation of the laser printer; and
   means (521) for controlling respective operations of said fixing heater controlling means (522), said laser scanner controlling means (523), said power supply controlling means (524), and said copy paper feeding motor controlling means (525).

8. A mechanism control apparatus comprising a microprocessor, characterized in that
   an operation unit (41) and a mechanism controller (42) which is operated upon operation of said operation unit are electrically connected to each other via a serial communication bus (43),
   said operation unit (41) includes an operation panel (29) provided with various operation switches and display means (36), a first serial/parallel I/O converter (44) for performing a serial communication with said mechanism controller (42) via said serial communication bus (43), and a microprocessor (45) for controlling said first serial/parallel I/O converter (44) to perform input/output processing of control data, and controlling said operation panel (29) via an I/O port (48), and

said mechanism controller (42) includes a second serial/parallel I/O converter (50) for performing a serial communication with said operation unit (41) via said serial communication bus (43), and a mechanism control I/O port (52), connected to various loads (53-58), for performing input/output control of control data with said second serial/parallel I/O converter (50) and said various loads (53-58).

F I G. 1

F I G.   2

F I G. 3

HOST CONTROLLER — 100

200

MAIN CONTROLLER

SERI/PARA CONVERTER — 202

INTERNAL SYS-TEM BUS

204

PROGRAM EXE. UNIT (16 OR 32-BIT MPU)

206

MAIN CONTROLLER PROG. FOR PROG./INFO.

208

DRAM TIMING MANAGER & BARRELSHIFT CONTROLLER

PRINT DATA

MECHA. CONT. STATUS

210

DRAM (PROGRAM WORK AREA & PRINT IMAGE DEVEL-OPMENT AREA)

44

SERI/PARA CONVERTER

X

43

50

SERI/PARA CONVERTER

42

MECHANICAL CONTROLLER (ASIC)

PRINT OUT

OPERATION PANEL

41

45

29

LCD — 36

4-BIT MPU

LED — 32~35

SW — 31

F I G.  4

F I G. 5